# FASCICULE DE BREVET EUROPEEN

(11) **EP 3 014 157 B1**
(45) Date de publication et mention de la délivrance du brevet: **07.08.2019**
(21) Numéro de dépôt: 14733149.0
(22) Date de dépôt: 24.06.2014
(51) Int. Cl.: F16L 33/01

(54) **CONDUITE FLEXIBLE ET PROCÉDÉ ASSOCIÉ**
SCHLAUCH UND VERFAHREN DAFÜR
FLEXIBLE PIPE AND METHOD

(30) Priorité: 24.06.2013 FR 1356007
(43) Date de publication de la demande: 04.05.2016
(73) Titulaire: Technip France, 92400 Courbevoie (FR)
(72) Inventeur: BOURGET, Jean-Christophe, 76230 Bois Guillaume (FR); LAAF, Fred, 24220-260 Rio de Janeiro (BR); PREVOST, Pascal, 76490 Villequier (FR); CHAUDET, Guillaume, 76770 Malaunay (FR)
(74) Mandataire: Lavoix
(86) Numéro de dépôt international: PCT/EP2014/063226
(87) Numéro de publication internationale: WO 2014/206959

(56) Documents cités:
- WO-A1-03/004921
- WO-A1-2007/144553
- FR-A1- 2 963 817
- JP-A- H05 231 576

## Description

La présente invention concerne une conduite flexible selon le préambule de la revendication 1.

La conduite est en particulier une conduite flexible de type non liée (« unbonded ») destinée au transport d'hydrocarbures à travers une étendue d'eau, tel qu'un océan, une mer, un lac ou une rivière.

Une telle conduite flexible est par exemple réalisée suivant les documents normatifs API 17J (Spécification for Unbonded Flexible Pipe) et API RP 17B (Recommended Practice for Flexible Pipe) établis par l'American Petroleum Institute.

La conduite est généralement formée d'un ensemble de couches concentriques et superposées. Elle est considérée comme « non liée » au sens de la présente invention dès lors qu'au moins une des couches de la conduite est apte à se déplacer longitudinalement par rapport aux couches adjacentes lors d'une flexion de la conduite. En particulier, une conduite non liée est une conduite dépourvue de matériaux liants raccordant des couches formant la conduite.

La conduite est généralement disposée à travers une étendue d'eau, entre un ensemble de fond, destiné à recueillir le fluide exploité dans le fond de l'étendue d'eau et un ensemble de surface flottant ou fixe, destiné à collecter et à distribuer le fluide. L'ensemble de surface peut être une plateforme semi-submersible, un FPSO ou un autre ensemble flottant.

Dans certains cas, pour l'exploitation de fluides en eaux profondes, la conduite flexible présente une longueur supérieure à 800 m. Les extrémités de la conduite présentent des embouts pour le raccordement à l'ensemble de fond et à l'ensemble de surface, ainsi que pour des raccordements intermédiaires.

Ces conduites subissent des efforts très élevés en traction axiale, notamment lorsque l'étendue d'eau dans laquelle est disposée la conduite est très profonde.

Dans ce cas, l'embout supérieur reliant la conduite à l'ensemble de surface doit reprendre une tension axiale très importante, qui peut atteindre plusieurs centaines de tonnes. Ces efforts sont transmis à l'embout par l'intermédiaire des couches d'armures de traction s'étendant le long de la conduite.

La tension axiale présente non seulement une valeur moyenne élevée, mais aussi des variations permanentes en fonction des mouvements verticaux de l'ensemble de surface et de la conduite, sous l'effet de l'agitation de l'étendue d'eau provoquée par la houle ou par les vagues.

Les variations de tension axiale peuvent atteindre plusieurs dizaines de tonnes et se répéter continuellement durant la durée de service de la conduite. En 20 ans, le nombre de cycles peut ainsi atteindre plus de 20 millions.

Il est donc nécessaire d'assurer une fixation particulièrement robuste entre les couches d'armures de traction et le corps de l'embout.

À cet effet, dans les embouts connus, l'ancrage des armures est assuré généralement par les frottements entre les fils d'armure et la résine époxy coulée dans la chambre délimitée par la voûte et le capot.

Par ailleurs, l'effet cabestan lié à la trajectoire en hélice des fils d'armure contribue également à l'ancrage des armures, cet effet pouvant être augmenté en modifiant le diamètre de l'hélice décrite par les fils dans l'embout par rapport au diamètre de cette hélice en longueur courante, par exemple en augmentant progressivement ce diamètre en suivant un cône ascendant, puis en le diminuant le long d'un cône descendant.

En outre, des déformations en forme de crochet, de vague ou de torsade peuvent être formées à l'extrémité de chaque fil d'armure pour être mises en prise dans la résine époxy, afin de réaliser un blocage mécanique s'opposant à la tension appliquée. Ces déformations initient l'effort nécessaire à la mise en place de l'effet cabestan.

WO 2007/144553 décrit un embout du type précité, dans lequel les fils d'armure s'écartent de manière hélicoïdale de l'axe de la conduite, puis se rapprochent de manière hélicoïdale de l'axe de la conduite dans la chambre délimitée par la voûte d'extrémité et par le capot de l'embout.

L'extrémité de chaque fil d'amure est de plus déformée en forme de vague, puis les fils d'armure sont noyés dans une résine thermodurcissable, afin d'être immobilisés dans la chambre définie par la voûte d'extrémité et le capot de l'embout.

Un tel embout ne donne pas entière satisfaction. Parfois, au cours du temps, l'ancrage des armures de traction devient défaillant en fatigue.

En particulier, cette défaillance apparaît au niveau des déformations en forme de vague, où les fils formant les armures ont été fortement déformés.

La défaillance est susceptible d'apparaître également dans la partie arrière, au niveau de la zone de décollement des armures par rapport au diamètre de la longueur courante, cette partie étant de plus fragilisée lors du montage en raison d'un pliage et d'un dépliage des armures, nécessaire à la mise en place de l'embout.

JPH05231576 et FR2963817 décrivent des embouts d'extrémité de conduites flexibles dans lesquels des tronçons d'extrémité d'éléments d'armures sont interposés entre une pièce interne et une pièce externe.

Un but de l'invention est donc d'obtenir un embout d'une conduite flexible présentant une reprise en tension axiale efficace, dans lequel le risque de défaillance en fatigue, notamment dans les tronçons d'extrémité des armures est fortement diminué.

A cet effet, l'invention a pour objet une conduite flexible selon la revendication 1.

La conduite selon l'invention peut comprendre l'une ou plusieurs des caractéristiques des revendications 2 à 9 ou la caractéristique suivante, prise(s) isolément ou suivant toute combinaison techniquement possible:
- l'ensemble de sertissage est noyé dans le matériau de remplissage.

L'invention a aussi pour objet un procédé de montage selon la revendication 10.

L'invention sera mieux comprise à la lecture de la description qui va suivre, donnée uniquement à titre d'exemple, et faite en se référant aux dessins annexés, sur lesquels :
- la figure 1 est une vue en perspective partiellement écorchée d'une première conduite flexible selon l'invention ;
- la figure 2 est une vue partielle, prise en coupe suivant un plan axial médian, de l'embout de la première conduite flexible selon l'invention ;
- la figure 3 est une vue analogue à la figure 2 de l'embout d'une deuxième conduite flexible qui ne fait pas partie de l'objet des revendications ;
- la figure 4 est une vue analogue à la figure 2 de l'embout d'une troisième conduite flexible selon l'invention.

Dans tout ce qui suit, les termes « extérieur » et « intérieur » s'entendent généralement de manière radiale par rapport à un axe A-A' de la conduite, le terme « extérieur » s'entendant comme relativement plus éloigné radialement de l'axe A-A' et le terme « intérieur » s'étendant comme relativement plus proche radialement de l'axe A-A' de la conduite.

Les termes « avant » et « arrière » s'entendent de manière axiale par rapport à un axe A-A' de la conduite, le terme « avant » s'entendant comme relativement plus éloigné du milieu de la conduite et plus proche d'une de ses extrémités, le terme « arrière » s'entendant comme relativement plus proche du milieu de la conduite et plus éloigné d'une de ses extrémités. Le milieu de la conduite est le point de la conduite situé à égale distance des deux extrémités de cette dernière.

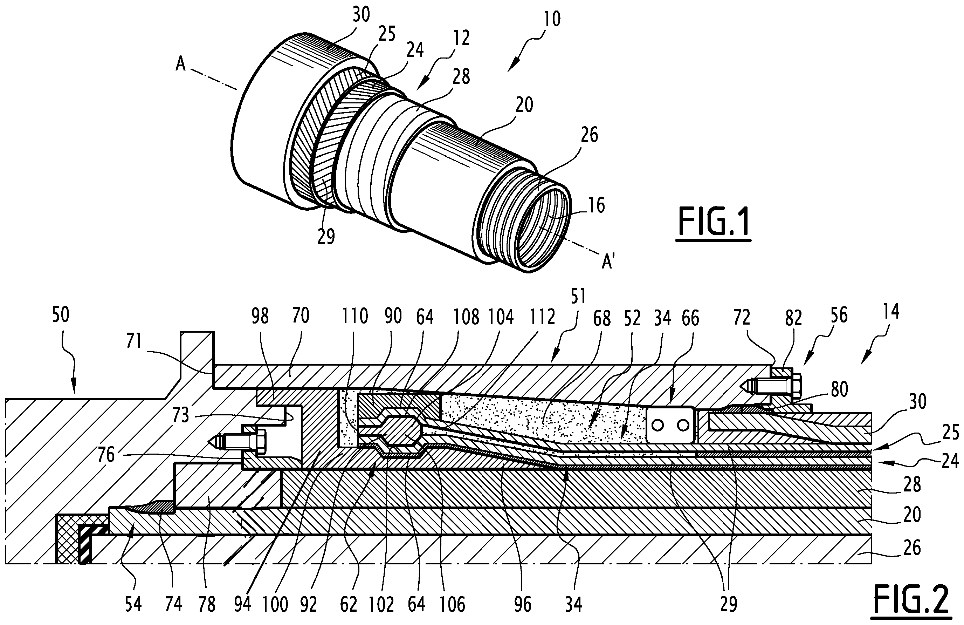

Une première conduite flexible 10 selon l'invention est illustrée partiellement par la figure 1.

La conduite flexible 10 comporte un tronçon central 12 illustré en partie sur la figure 1. Elle comporte, à chacune des extrémités axiales du tronçon central 12, un embout d'extrémité 14 (non visible sur la figure 1) dont les parties pertinentes sont représentées sur la figure 2.

En référence à la figure 1, la conduite 10 délimite un passage central 16 de circulation d'un fluide, avantageusement d'un fluide pétrolier. Le passage central 16 s'étend suivant un axe A-A', entre l'extrémité amont et l'extrémité aval de la conduite 10. Il débouche à travers les embouts 14.

La conduite flexible 10 est destinée à être disposée à travers une étendue d'eau (non représentée) dans une installation d'exploitation de fluide, notamment d'hydrocarbures.

L'étendue d'eau est par exemple, une mer, un lac ou un océan. La profondeur de l'étendue d'eau au droit de l'installation d'exploitation de fluide est par exemple comprise entre 500 m et 3000 m.

L'installation d'exploitation de fluide comporte un ensemble de surface notamment flottant et un ensemble de fond (non représentés) qui sont généralement raccordés entre eux par la conduite flexible 10.

La conduite flexible 10 est de préférence une conduite « non liée » (désignée par le terme anglais « unbonded »).

Au moins deux couches adjacentes de la conduite flexible 10 sont libres de se déplacer longitudinalement l'une par rapport à l'autre lors d'une flexion de la conduite.

Avantageusement, toutes les couches de la conduite flexible sont libres de se déplacer l'une par rapport à l'autre. Une telle conduite est par exemple décrite dans les documents normatifs publiés par l'American Petroleum Institute (API), API 17J, et API RP17B.

Comme illustré par la figure 1, la conduite 10 délimite une pluralité de couches concentriques autour de l'axe A-A', qui s'étendent continûment le long du tronçon central 12 jusqu'aux embouts 14 situés aux extrémités de la conduite.

Selon l'invention, la conduite 10 comporte au moins une première gaine tubulaire 20 à base de matériau polymère constituant avantageusement une gaine de pression.

La conduite 10 comporte en outre au moins une couche d'armures de traction 24, 25 disposée extérieurement par rapport à la première gaine 20.

Avantageusement, et selon l'utilisation souhaitée, la conduite 10 comporte en outre une carcasse interne 26 disposée à l'intérieur de la gaine de pression 20, une voûte de pression 28 intercalée entre la gaine de pression 20 et la ou les couches d'armures de traction 24, 25 et une gaine externe 30, destinée à la protection de la conduite 10.

De manière connue, la gaine de pression 20 est destinée à confiner de manière étanche le fluide transporté dans le passage 16. Elle est formée en matériau polymère, par exemple à base d'un polyoléfine tel que du polyéthylène, à base d'un polyamide tel que du PA11 ou du PA12, ou à base d'un polymère fluoré tel que du polyfluorure de vinylidène (PVDF).

L'épaisseur de la gaine de pression 20 est par exemple comprise entre 5 mm et 20 mm.

La carcasse 26, lorsqu'elle est présente, est formée par exemple d'un feuillard métallique profilé, enroulé en spirale. Les spires du feuillard sont avantageusement agrafées les unes aux autres, ce qui permet de reprendre les efforts radiaux d'écrasement.

Dans cet exemple, la carcasse 26 est disposée à l'intérieur de la gaine de pression 20. La conduite est alors désignée par le terme anglais « rough bore » en raison de la géométrie de la carcasse 26

En variante (non représentée), la conduite flexible 10 est dépourvue de carcasse interne 26, elle est alors désignée par le terme anglais « smooth bore ».

L'enroulement hélicoïdal du feuillard métallique profilé formant la carcasse 26 est à pas court, c'est-à-dire qu'il présente un angle d'hélice de valeur absolue proche de 90°, typiquement compris entre 75° et 90°.

Dans cet exemple, la voûte de pression 28 est destinée à reprendre les efforts liés à la pression régnant à l'intérieur de la gaine de pression 20. Elle est par exemple formée d'un fil profilé métallique entouré en hélice autour de la gaine 20. Le fil profilé présente généralement une géométrie complexe, notamment en forme de Z, de T, de U, de K, de X ou de I.

La voûte de pression 28 est enroulée en hélice à pas court autour de la gaine de pression 20, c'est-à-dire avec un angle d'hélice de valeur absolue proche de 90°, typiquement compris entre 75° et 90°.

La conduite flexible 10 selon l'invention comprend au moins une couche d'armures 24, 25 formée d'un enroulement hélicoïdal d'au moins un élément d'armure 29 allongé.

Dans l'exemple représenté sur la figure 1, la conduite flexible 10 comporte une pluralité de couches d'armures 24, 25, notamment une couche d'armures intérieure 24, appliquée sur la voûte de pression 28 (ou sur la gaine 20 lorsque la voûte 28 est absente) et une couche d'armures extérieure 25 autour de laquelle est disposée la gaine extérieure 30.

Chaque couche d'armures 24, 25 comporte des éléments d'armure 29 longitudinaux enroulés à pas long autour de l'axe A-A' de la conduite.

Par « enroulé à pas long », on entend que la valeur absolue de l'angle d'hélice est inférieure à 60°, et est typiquement comprise entre 25° et 55°.

Les éléments d'armure 29 d'une première couche 24 sont enroulés généralement suivant un angle opposé par rapport aux éléments d'armure 29 d'une deuxième couche 25. Ainsi, si l'angle d'enroulement des éléments d'armure 29 de la première couche 24 est égal à + α, α étant compris entre 25° et 55°, l'angle d'enroulement des éléments d'armure 29 de la deuxième couche d'armures 25 disposée au contact de la première couche d'armures 24 est par exemple égal à - α°.

Les éléments d'armure 29 sont par exemple formés par des fils métalliques, notamment des fils en acier, ou par des rubans en matériau composite, par exemple des rubans renforcés de fibres de carbone.

Comme on le verra plus bas, les éléments d'armure 29 présentent chacun un tronçon d'extrémité 34 introduit dans l'embout 14. Le tronçon d'extrémité 34 s'étend jusqu'à une extrémité libre disposée dans l'embout 14. Il présente avantageusement une trajectoire hélicoïdale ou pseudo-hélicoïdale d'axe A-A' dans l'embout 14.

La gaine externe 30 est destinée à empêcher la perméation de fluide depuis l'extérieur de la conduite flexible 10 vers l'intérieur. Elle est avantageusement réalisée en matériau polymère, notamment à base d'un polyoléfine, tel que du polyéthylène, à base d'un polyamide, tel que du PA11 ou du PA12, ou à base d'un polymère fluoré tel que du polyfluorure de vinylidène (PVDF).

L'épaisseur de la gaine externe 30 est par exemple comprise entre 5 mm et 15 mm.

Comme illustré par la figure 2, chaque embout 14 comporte une voûte d'extrémité 50 et un capot extérieur de liaison 51 faisant saillie axialement vers l'arrière à partir de la voûte 50. Le capot 51 délimite, avec la voûte d'extrémité 50, une chambre 52 de réception des tronçons d'extrémité 34 des éléments d'armure 29.

L'embout 14 comporte en outre un ensemble avant 54 d'étanchéité autour de la gaine tubulaire 20, représenté schématiquement sur la figure 2, et un ensemble arrière 56 d'étanchéité autour de la gaine extérieure 30.

Selon l'invention, l'embout 14 comporte en outre un ensemble avant 62 de sertissage de chaque tronçon d'extrémité 34 des éléments d'armure 29, propre à former une déformation radiale 64 sur chaque tronçon d'extrémité 34.

L'embout 14 comprend de plus avantageusement un organe arrière 66 de maintien des couches d'armures 24, 25 situé dans la zone arrière de l'embout 14, et un matériau de remplissage 68 solide disposé dans la chambre 52 pour noyer les tronçons d'extrémité 34, en particulier au niveau de chaque déformation radiale 64.

L'ensemble avant de sertissage 62 est distinct du matériau de remplissage 68. Il est avantageusement reçu dans le matériau de remplissage 68.

Dans cet exemple, la voûte d'extrémité 50 est destinée à raccorder la conduite 10 à un autre embout de connexion 14 ou à des équipements terminaux, avantageusement par l'intermédiaire d'une bride d'extrémité (non représentée).

La voûte d'extrémité 50 présente un alésage central destiné à recevoir l'extrémité de la première gaine 20 et à permettre l'écoulement du fluide circulant à travers le passage central 16 vers l'extérieur de la conduite 10.

Le capot 51 comporte une paroi périphérique 70 tubulaire s'étendant autour de l'axe A-A'. La paroi périphérique 70 présente un bord avant 71 fixé sur la voûte d'extrémité 50, à l'écart radialement des couches d'armures 24, 25 et un bord arrière 72 s'étendant axialement vers l'arrière au-delà de la voûte d'extrémité 50.

Le capot 51 délimite la chambre 52 radialement vers l'extérieur. Une face arrière 73 de la voûte d'extrémité 50 délimite axialement la chambre 52 vers l'avant.

L'ensemble avant d'étanchéité 54 est avantageusement situé à l'avant de l'embout 14, en contact avec la voûte 50. Dans le mode de réalisation de la figure 2, l'ensemble avant d'étanchéité 54 est décalé axialement vers l'avant par rapport à l'ensemble avant de sertissage 62.

De manière connue, il comporte une bague avant 74 de sertissage, destinée à venir en prise sur la gaine de pression 20, et un collier de serrage 76.

Dans l'exemple représenté sur la figure 2, dans lequel la conduite 10 comporte une voûte de pression 28, l'ensemble avant 54 comporte en outre une bague intermédiaire 78 d'arrêt de la voûte de pression 28. La bague intermédiaire d'arrêt 78 est interposée entre la bague avant 74 de sertissage et le collier de serrage 76.

L'ensemble arrière d'étanchéité 56 est disposé à l'arrière de l'organe arrière de maintien 66, et à l'arrière de l'ensemble avant de sertissage 62.

Il comporte au moins une bague arrière de sertissage 80 sertissant la gaine externe 30, et un collier arrière 82 de serrage de la bague arrière 80, fixé sur le capot 51, avantageusement au niveau du bord arrière 72 de la paroi périphérique 70.

Dans l'exemple représenté sur la figure 2, l'ensemble avant de sertissage 62 comporte, depuis l'extérieur vers l'intérieur, un anneau extérieur 90 de sertissage, appliqué à l'extérieur des tronçons d'extrémité 34 des couches d'armures 24, 25, un anneau intermédiaire 92 de déformation, interposé entre les tronçons d'extrémité 34 des couches d'armures 24, 25, et avantageusement, une voûte 94 de support.

Dans cet exemple, la voûte de support 94 est appliquée sur la voûte de pression 28. Elle comprend une partie avant 96 biseautée, et une partie arrière 98 en forme de collerette fixée sur la voûte d'extrémité 50.

La voûte de support 94 comporte en outre une partie intermédiaire d'appui 100 cylindrique disposée en regard de l'anneau extérieur 90 et de l'anneau intermédiaire 92.

L'épaisseur de la partie intermédiaire 100 de la voûte de support 94 est avantageusement comprise entre 5 mm et 50 mm, préférentiellement comprise entre 10 mm et 20 mm.

La partie intermédiaire 100 définit un premier relief radial 102 de déformation d'un tronçon d'extrémité 34 en regard, formé dans cet exemple par un creux annulaire.

L'anneau intermédiaire 92 comporte un jonc arrière 104 définissant un relief radial interne 106 dirigé vers l'axe A-A' et un relief radial extérieur 108 dirigé à l'opposé du relief interne 106, à l'écart de l'axe A-A'.

L'anneau intermédiaire 92 comporte en outre avantageusement une paroi avant 110 d'épaisseur inférieure à celle du jonc 104, faisant saillie vers l'avant à partir du jonc 104.

Le relief interne 106 fait saillie radialement vers la voûte de support 94, en regard du premier relief 102. Il s'étend avantageusement continûment sur une circonférence autour de l'axe A-A'.

Le relief extérieur 108 fait saillie vers l'anneau extérieur 90. Il s'étend avantageusement continûment sur une circonférence autour de l'axe A-A'.

Après sertissage, l'anneau extérieur 90 est serré sur un tronçon d'extrémité 34, en regard du relief extérieur 108. Il définit alors un deuxième relief radial 112 en creux, à l'opposé du relief radial extérieur 108.

Au moins un tronçon d'extrémité 34 de la couche d'armures 24 interne est interposé entre la voûte de support 94 et l'anneau intermédiaire 92.

Le relief interne 106 et/ou le premier relief 102 impriment une déformation radiale 64 en forme de vague sur le tronçon d'extrémité 34. La déformation radiale 64 est ici dirigée vers l'axe A-A'.

Dans le mode de réalisation de la figure 2, à l'arrière de la déformation radiale 64, le tronçon d'extrémité 34 s'applique sur la partie avant biseautée 96, ce qui écarte radialement le tronçon d'extrémité 34 de l'axe A-A'.

Par ailleurs, au moins un tronçon d'extrémité 34 de la couche d'armures extérieure 25 est interposé entre l'anneau intermédiaire 92 et l'anneau extérieur 90.

Le relief extérieur 108 et/ou le deuxième relief 112 impriment une déformation radiale 64 en forme de vague sur le tronçon d'extrémité 34. La déformation radiale 64 est ici dirigée à l'écart de l'axe A-A'.

De plus, à l'arrière de la déformation radiale 64, le tronçon d'extrémité 34 s'applique sur un tronçon d'extrémité 34 de la couche d'armures intérieure 24, lui-même en appui sur la partie avant biseautée 96.

Les déformations radiales 64 étant réalisées directement in situ lors du sertissage de l'anneau extérieur 90, il n'est pas nécessaire de former préalablement des crochets ou des ondulations sur chaque élément d'armure 29, ce qui renforce les propriétés mécaniques de l'élément d'armure 29 et sa résistance à la fatigue.

A l'emplacement de l'organe arrière de maintien 66, les éléments d'armure 29 des couches d'armures 24, 25 sont enroulés hélicoïdalement avec le même rayon d'hélice que celui qu'ils ont au niveau du tronçon central 12. La zone au niveau de laquelle les couches d'armures 24, 25 s'écartent de manière hélicoïdale de l'axe A-A' de la conduite est située à l'avant de l'organe annulaire de maintien 66, en arrière de la voûte d'extrémité 50, sur la partie avant biseautée 96 de la voûte de support 94.

Ainsi, les tronçons d'extrémité 34 des éléments d'armure 29 sont conservés dans un état proche de celui de la longueur courante, grâce au faible décollement engendré par la voûte de support 94.

Ceci permet avantageusement de supprimer le pliage/dépliage des éléments d'armure 29 lors de la mise en place de l'embout 14.

Avantageusement, la longueur de chaque déformation radiale 64 en forme de vague, prise le long de l'axe A-A', est comprise entre 10 mm et 150 mm.

Le sertissage réalisé sur les tronçons d'extrémité 34 engendre des déformations radiales 64 très performantes en termes de retenue, ce qui permet de diminuer la longueur d'ancrage, et donc l'allongement dans la partie critique de changement de rayons des éléments d'armure 29.

En outre, un serrage uniforme est obtenu à l'extrémité de chaque élément d'armure 29 et le temps de montage est diminué, puisque tous les tronçons d'extrémité 34 sont sertis en une seule opération. La reproductibilité de l'opération est en outre augmentée.

En référence à la figure 2, l'organe arrière de maintien 66 est disposé autour des éléments d'armure 29 de la couche d'armures 25, au niveau de la partie arrière de l'embout 14.

A l'emplacement de l'organe arrière de maintien 66, les éléments d'armure 29 des couches d'armures 24, 25 sont enroulés hélicoïdalement avec le même rayon d'hélice que celui qu'ils ont au niveau du tronçon central 12.

L'organe arrière de maintien 66 se présente sous la forme d'un collier annuaire, et ne contribue pas significativement à la reprise des efforts de tension. Sa fonction est notamment d'empêcher la désorganisation des couches d'armures 24, 25 pendant le montage de l'embout 14, comme cela sera exposé plus loin.

Le matériau 68 de remplissage solide, tel qu'une résine polymérique thermodurcissable de type epoxy, est disposé dans la chambre 52 autour de l'organe arrière de maintien 66, de la voûte 50, et des tronçons d'extrémité 34 des éléments d'armure 29. Il noie notamment les déformations radiales 64.

Le matériau 68 remplit sensiblement totalement la chambre 52. Il est de préférence injecté de manière fluide dans la chambre 52 et se solidifie dans celle-ci, en liant les tronçons d'extrémité 34 des éléments d'armure 29 à la voûte 50 et/ou au capot 51.

L'assemblage de l'embout 14 selon l'invention est réalisé comme suit.

Initialement, les différentes couches de la conduite 10 sont coupées à la bonne longueur pour faire apparaître, sur la voûte 28, un tronçon d'extrémité libre 34 de chaque élément d'armure 29 des couches d'armures 24, 25.

Chaque tronçon d'extrémité libre 34 est initialement dépourvu de déformation radiale, notamment de déformation en forme de vague ou de crochet.

Puis, l'organe arrière de maintien 66 dans une configuration expansée est monté autour de la couche d'armures 25, avant d'être serré autour de cette dernière. Ceci étant fait, l'anneau extérieur 90 dans une configuration expansée est engagé autour des tronçons d'extrémité 34, à l'extérieur de ceux-ci.

Puis, les tronçons d'extrémité 34 de la couche d'armures extérieure 25 sont légèrement soulevés à l'écart de l'axe A-A', avantageusement sans les replier vers l'arrière, pour introduire l'anneau intermédiaire 82 entre les tronçons d'extrémité 34 de la couche d'armures intérieure 24 et les tronçons d'extrémité 34 de la couche d'armures extérieure 25.

Les tronçons d'extrémité 34 sont ensuite légèrement soulevés à l'écart de l'axe A-A', avantageusement sans les replier vers l'arrière, pour introduire la voûte de support 94 sous les tronçons d'extrémité 34.

Le premier relief 102 présent sur la voûte de support 94, les reliefs 106, 108 sur l'anneau intermédiaire 92 et l'anneau extérieur 90 sont alors placés en regard les uns des autres.

Un dispositif de sertissage de type connu est alors disposé autour de l'anneau extérieur 90. Un exemple de dispositif de sertissage comporte des mors déployables radialement vers l'axe A-A'.

L'anneau extérieur 90 est alors serti par le dispositif de sertissage en le comprimant radialement vers l'axe A-A' contre les tronçons d'extrémité 34 de la couche d'armures extérieure 25, contre le jonc 104 de l'anneau intermédiaire 92 et contre le relief radial 102 de la partie intermédiaire 100 de la voûte de support 94.

La déformation radiale de l'anneau extérieur 90, et la coopération entre les reliefs respectifs 108, 112 et 102, 106 créent des déformations radiales 64 en forme de vague à l'extrémité libre des tronçons d'extrémité 34.

Dans l'exemple représenté sur la figure 2, la déformation radiale 64 formée sur les tronçons d'extrémité 34 de la couche d'armures extérieure 25 est dirigée à l'écart de l'axe A-A', à l'opposé de la déformation radiale formée sur les tronçons d'extrémité 34 de la couche d'armures intérieure 24.

La voûte 50 et l'ensemble avant d'étanchéité 54 sont ensuite mis en place. Le collier de serrage 76 est alors serré, pour réaliser l'étanchéité autour de la gaine 20

Le capot 51 est ensuite mis en place et est fixé à la voûte 50.

L'ensemble arrière d'étanchéité 56 est ensuite mis en place et est fixé au capot 51.

Enfin, le matériau de remplissage 68 est introduit dans la chambre 52, avantageusement sous forme fluide. Le matériau 68 remplit la chambre 52 et se solidifie entre la voûte 50 et le capot 51 autour des tronçons d'extrémité 34 des éléments d'armures 29, en particulier sur les déformations radiales 64. Les tronçons d'extrémité 34 sont alors noyés dans le matériau de remplissage 68.

En fonctionnement, lorsque l'embout 14 est raccordé à un autre embout ou à un ensemble de surface, la tension axiale transmise par les couches d'armures 24, 25 résultant du poids de la conduite 10 est reprise par les tronçons 34 noyés dans le matériau de remplissage 68, notamment grâce à la présence des déformations radiales 64 en forme de vague réalisées lors du sertissage de l'anneau extérieur 90.

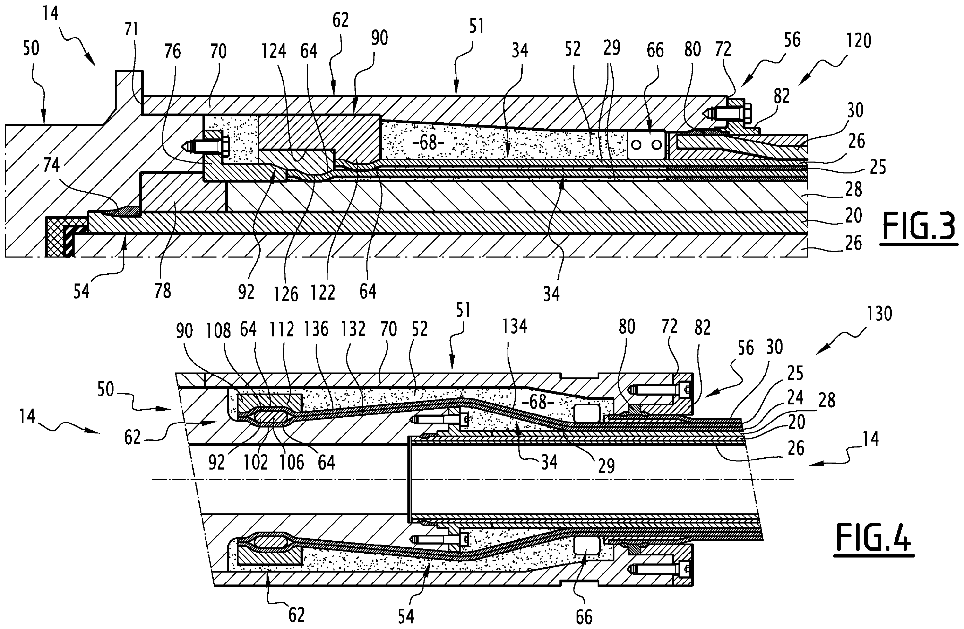

L'embout 14 d'une deuxième conduite flexible 120 est illustré par la figure 3.

À la différence de l'embout 14 illustré sur la figure 2, l'ensemble avant de sertissage 62 est dépourvu de voûte de support 94.

L'anneau extérieur 90 comporte un relief radial intérieur 122 en forme de vague qui fait saillie radialement vers l'axe A-A'. Il comporte, à l'avant du relief intérieur 122, un logement 124 d'insertion de l'anneau intermédiaire 92.

Le relief intérieur 122 s'applique sur le tronçon d'extrémité 34 de la couche d'armures extérieure 25 pour engendrer une déformation radiale 64 en forme de vague.

À la différence de l'embout 14 illustré sur la figure 2, l'anneau intermédiaire 92 n'est pas interposé entre les tronçons d'extrémité 34 des couches d'armures 24, 25.

L'anneau intermédiaire 92 est disposé à l'avant de l'extrémité avant de la couche d'armures extérieure 25, dans le logement d'insertion 124.

L'anneau intermédiaire 92 comporte un relief radial intérieur 126 en forme de vague, qui fait saillie radialement vers l'axe A-A'.

Le relief intérieur 126 s'applique sur le tronçon d'extrémité 34 de la couche d'armures intérieure 24, à l'avant du tronçon d'extrémité 34 de la couche d'armures extérieure 25, pour engendrer une déformation radiale 64 en forme de vague.

Avantageusement, dans ce mode de réalisation, les tronçons d'extrémité 34 s'étendent sensiblement dans une enveloppe cylindrique, sans s'écarter de l'axe A-A', en conservant le rayon d'hélice qu'ils ont au niveau du tronçon central 12 de la conduite 120.

Ainsi, l'embout 14 de la conduite 120 est particulièrement résistant en fatigue, puisqu'aucun pliage ou soulèvement des tronçons d'extrémité 34 n'est nécessaire pour réaliser l'ancrage des éléments d'armure 29.

Pour assurer la transmission des efforts, l'anneau extérieur 90 s'applique sur le capot 51. L'anneau intermédiaire 92 s'appuie sur l'anneau extérieur 90 dans le logement 124, sur la saillie 122.

L'anneau intermédiaire 92 repose aussi partiellement sur le collier de serrage 76.

Du fait de l'absence d'une voûte de support intercalée entre la voûte de pression 28 et le tronçon d'extrémité 34 de la couche d'armures extérieure 24, les pressions radiales de sertissage exercées par l'anneau extérieur 90 et par l'anneau intermédiaire 92 sont reprises par les couches internes de la conduite flexible 10. Par suite, dans ce mode de réalisation ces couches internes et notamment la voûte de pression 28 et la carcasse 26 doivent être suffisamment résistantes pour supporter la totalité des efforts de sertissage.

L'assemblage de l'embout 14 décrit sur la figure 3 diffère de l'assemblage de l'embout 14 décrit sur la figure 2 en ce qu'aucun décollement des tronçons d'extrémité 34 n'est réalisé lors du montage.

L'anneau intermédiaire 92 est tout d'abord mis en place, et l'anneau extérieur 90 est serti autour de l'anneau intermédiaire 92 et en regard du tronçon d'extrémité 34 de la couche d'armures extérieure 25, afin de former les déformations radiales 64 en regard des reliefs 122, 126.

L'embout 14 d'une troisième conduite 130 selon l'invention est illustré par la figure 4.

À la différence des embouts représentés sur les figures 2 et 3, l'ensemble avant de sertissage 62 n'est pas situé au droit des couches internes de la conduite flexible 10, et notamment de sa voûte de pression 28. Dans ce mode de réalisation, l'ensemble avant de sertissage 62 est ici situé au droit de la voûte extérieure 50 de l'embout 14. La pression de sertissage est donc reprise par la voûte extérieure, ce qui évite notamment de contraindre la voûte de pression 28.

La voûte extérieure 50 comporte une portée avantageusement conique 132 de support des tronçons d'extrémité 34 des éléments d'armure 29, et de l'ensemble avant 62 de sertissage.

La portée conique 132 diverge à l'écart de l'axe A-A' depuis l'avant vers l'arrière. Elle définit avantageusement un premier relief radial 102, qui dans cet exemple, est en creux.

L'anneau intermédiaire 92 est disposé en regard de la portée conique 132, avantageusement au niveau du premier relief 102. Il s'interpose entre les tronçons d'extrémité 34 de la couche d'armures interne 24 et de la couche d'armures extérieure 25. Comme précédemment, il comporte un relief radial interne 106 et un relief radial extérieur 108.

De manière analogue à l'embout 14 de la figure 2, l'anneau extérieur 90 est serti autour du tronçon d'extrémité 34 de la couche d'armures extérieure 25, de l'anneau intermédiaire 92, et du tronçon d'extrémité 34 de la couche d'armures intérieure 24.

L'anneau extérieur 90, l'anneau interne 92, et le relief 102 sur la portée conique 132 engendrent ainsi, sur chaque tronçon d'extrémité 34, une déformation radiale 64 en forme de vague.

À la différence de l'embout 14 représenté sur la figure 2, chaque tronçon d'extrémité 34 présente une partie arrière 134 qui s'écarte de l'axe A-A' depuis l'organe arrière 66 vers la portée conique 132, et une partie avant 136 qui se rapproche de l'axe A-A' sur la portée conique 132.

Dans cet exemple, l'ensemble avant d'étanchéité 54 est situé sous les tronçons d'extrémité 34 à l'arrière de la voûte d'extrémité 50, et à l'arrière des déformations radiales 64.

## Revendications

1. Conduite flexible (10 ; 120 ; 130) de transport de fluide, comprenant au moins une gaine tubulaire (20) et au moins une couche (24, 25) d'armures de traction disposée extérieurement par rapport à la gaine tubulaire (20), la couche d'armures (24, 25) comprenant une pluralité d'éléments d'armure (29) filiformes, la conduite flexible (10) comprenant un embout (14) de connexion, monté à l'extrémité de la gaine tubulaire (20),
l'embout (14) comportant :
- au moins un tronçon d'extrémité (34) de chaque élément d'armure (29),
- une voûte d'extrémité (50) et un capot (51) fixé sur la voûte d'extrémité (50), la voûte d'extrémité (50) et le capot (51) délimitant entre eux une chambre (52) de réception du tronçon d'extrémité ;
- un matériau de remplissage (68) de la chambre de réception (52), dans lequel est noyé le tronçon d'extrémité (34);
- au moins un ensemble (62) de sertissage du tronçon d'extrémité (34), définissant au moins un relief radial (102, 106, 108, 112 ; 122, 126) de sertissage du tronçon d'extrémité (34), le tronçon d'extrémité (34) présentant une déformation radiale (64) en regard du relief de sertissage (102, 106, 108, 112 ; 122, 126),
l'ensemble de sertissage (62) comportant un anneau extérieur (90) de sertissage, une voûte de support (94) située radialement à l'opposé de l'anneau extérieur (90) de sertissage, au moins un tronçon d'extrémité (34) étant disposé entre la voûte de support (94) et l'anneau extérieur (90), **caractérisée en ce que** la voûte de support (94) définit un premier relief radial de sertissage (102), situé en regard de l'anneau extérieur (90), le relief radial de sertissage (102) comportant un creux radial et/ou une saillie radiale.

2. Conduite selon la revendication 1, **caractérisé en ce que** la déformation radiale (64) est en forme de vague.

3. Conduite selon l'une quelconque des revendications précédentes, **caractérisé en ce que** la voûte de support (94) est fixée sur la voûte d'extrémité (50).

4. Conduite selon l'une quelconque des revendications précédentes, comportant au moins une première couche d'armures de traction (24) et au moins une deuxième couche d'armures de traction (25), l'embout (14) comportant un anneau intermédiaire (92) de sertissage disposé entre un premier tronçon d'extrémité (34) de la première couche d'armures de traction (24) et un deuxième tronçon d'extrémité (34) de la deuxième couche d'armures de traction (25).

5. Conduite selon la revendication 4, **caractérisé en ce que** l'anneau intermédiaire de sertissage (92) présente un premier relief intermédiaire (106) déformant radialement le premier tronçon d'extrémité (34) et/ou un deuxième relief intermédiaire (108) déformant radialement le deuxième tronçon d'extrémité (34).

6. Conduite selon l'une quelconque des revendications précédentes, **caractérisé en ce que** la partie du tronçon d'extrémité (34) sertie par l'ensemble de sertissage (62) s'applique directement sur un autre tronçon d'extrémité (34) d'une autre couche d'armures (24).

7. Conduite selon la revendication 6, **caractérisé en ce que** le tronçon d'extrémité (34) s'étend sensiblement parallèlement à la gaine tubulaire (20) sur toute la longueur de l'embout à l'arrière de la déformation radiale (64).

8. Conduite selon l'une quelconque des revendications précédentes, **caractérisé en ce qu'**il comporte un ensemble avant (54) d'étanchéité autour de la gaine tubulaire (20), l'ensemble avant d'étanchéité (54) étant décalé axialement à l'avant ou à l'arrière de l'ensemble de sertissage (62) du tronçon d'extrémité (34).

9. Conduite selon l'une quelconque des revendications précédentes, **caractérisé en ce qu'**il comporte un organe arrière (66) de maintien radial du tronçon d'extrémité (34), décalé axialement vers l'arrière par rapport à l'ensemble de sertissage (62) du tronçon d'extrémité (34).

10. Procédé de montage d'un embout (14) d'une conduite flexible (10 ; 120 ; 130), comprenant les étapes suivantes :
- fourniture d'une gaine tubulaire (20) ;
- disposition d'au moins une couche (24, 25) d'armures de traction à l'extérieur de la gaine tubulaire (20), la couche d'armures de traction (24, 25) comprenant une pluralité d'éléments d'armure (29) filiformes, chaque élément d'armure (29) comprenant un tronçon d'extrémité (34) ;
- mise en place d'une voûte d'extrémité (50) et d'un capot (51) fixé sur la voûte d'extrémité (50), la voûte d'extrémité (50) et le capot (51) délimitant entre eux une chambre (52) de réception du tronçon d'extrémité (34) ;
- introduction d'un matériau de remplissage (68) dans la chambre (52) de réception pour noyer le tronçon d'extrémité (34) ;
**caractérisé en ce qu'**il comporte l'étape suivante :
- mise en place d'un ensemble (62) de sertissage du tronçon d'extrémité (34), définissant au moins un relief radial (102, 106, 108, 112 ; 122, 126) de sertissage du tronçon d'extrémité (34), pour former une déformation radiale (64) sur le tronçon d'extrémité (34) en regard du relief radial de sertissage (102, 106, 108, 112 ; 122, 126).
l'ensemble de sertissage (62) comportant un anneau extérieur (90) de sertissage, une voûte de support (94) située radialement à l'opposé de l'anneau extérieur (90) de sertissage, au moins un tronçon d'extrémité (34) étant disposé entre la voûte de support (94) et l'anneau extérieur (90),
la voûte de support (94) définissant un premier relief radial de sertissage (102), situé en regard de l'anneau extérieur (90), le relief radial de sertissage (102) comportant un creux radial et/ou une saillie radiale.

## Patentansprüche

1. Flexible Rohrleitung (10; 120; 130) zum Transport eines Fluid, aufweisend wenigstens eine rohrförmige Hülle (20) und wenigstens eine Schicht (24, 25) Zugverstärkungen, die bezüglich der rohrförmigen Hülle (20) außen angeordnet ist, wobei die Schicht Verstärkungen (24, 25) aufweist eine Mehrzahl von fadenförmigen Verstärkungselementen (29), wobei die flexible Rohrleitung (10) ein Verbindungs-Endstück (14) aufweist, das an das Ende der rohrförmigen Hülle (20) montiert ist,
wobei das Endstück (14) aufweist:
- wenigstens einen Endabschnitt (34) von jedem Verstärkungselement (29),
- eine End-Voute (50) und eine Abdeckung (51), die an der End-Voute (50) fixiert ist, wobei die End-Voute (50) und die Abdeckung (51) zwischen sich eine Kammer (52) zur Aufnahme des Endabschnitts begrenzen,
- ein Material zur Füllung (68) der Aufnahme-Kammer (52), in welches der Endabschnitt (34) eingebettet ist,
- wenigstens eine Einrichtung (62) zur Klemmeinfassung des Endabschnitts (34), die wenigstens ein radiales Relief (102, 106, 108, 112; 122, 126) zur Klemmeinfassung des Endabschnitts (34) definiert, wobei der Endabschnitt (34) eine radiale Verformung (64) gegenüber dem Klemmeinfassungs-Relief (102, 106, 108, 112; 122, 126) hat,
wobei die Klemmeinfassungs-Einrichtung (62) aufweist einen äußeren Ring (90) zur Klemmeinfassung, eine Stütz-Voute (94), die dem äußeren Ring (90) zur Klemmeinfassung radial gegenüber angeordnet ist, wobei wenigstens ein Endabschnitt (34) zwischen der Stütz-Voute (94) und dem äußeren Ring (90) angeordnet ist,
**dadurch gekennzeichnet, dass** die Stütz-Voute (94) ein erstes radiales Relief zur Klemmeinfassung (102) definiert, das dem äußeren Ring (90) gegenüber angeordnet ist, wobei das radiale Relief zur Klemmeinfassung (102) eine radiale Vertiefung und/oder einen radialen Vorsprung aufweist.

2. Rohrleitung gemäß Anspruch 1, **dadurch gekennzeichnet, dass** die radiale Verformung (64) wellenförmig ist.

3. Rohrleitung gemäß irgendeinem der vorhergehenden Ansprüche, **dadurch gekennzeichnet, dass** die Stütz-Voute (94) an der End-Voute (50) befestigt ist.

4. Rohrleitung gemäß irgendeinem der vorhergehenden Ansprüche, aufweisend wenigstens ein erste Schicht Zugverstärkungen (24) und wenigstens eine zweite Schicht Zugverstärkungen (25), wobei das Endstück (14) einen Zwischen-Ring (92) zur Klemmeinfassung aufweist, der zwischen einem ersten Endabschnitt (34) der ersten Schicht Zugverstärkungen (24) und einem zweiten Endabschnitt (34) der zweiten Schicht Zugverstärkungen (25) angeordnet ist.

5. Rohrleitung gemäß Anspruch 4, **dadurch gekennzeichnet, dass** der Zwischen-Ring zur Klemmeinfassung (92) ein erstes Zwischen-Relief (106), das den ersten Endabschnitt (34) radial deformiert, und/oder ein zweites Zwischen-Relief (108) definiert, das den zweiten Endabschnitt (34) radial deformiert.

6. Rohrleitung gemäß irgendeinem der vorhergehenden Ansprüche, **dadurch gekennzeichnet, dass** der Teil des Endabschnitts (34), der von der Klemmeinfassung-Einrichtung (62) klemmeingefasst ist, direkt an einem anderen Endabschnitt (34) einer anderen Schicht Verstärkungen (24) anliegt.

7. Rohrleitung gemäß Anspruch 6, **dadurch gekennzeichnet, dass** der Endabschnitt (34) sich rückwärtig der radialen Verformung (64) über die ganze Länge des Endstücks im Wesentlichen parallel zu der rohrförmigen Hülle (20) erstreckt.

8. Rohrleitung gemäß irgendeinem der vorhergehenden Ansprüche, **dadurch gekennzeichnet, dass** sie aufweist eine vordere Einrichtung (54) zur Abdichtung um die rohrförmige Hülle (20) herum, wobei die vordere Abdichtungs-Einrichtung (54) axial im Abstand nach vorne oder nach hinten von der Einrichtung zur Klemmeinfassung (62) des Endabschnitts (34) ist.

9. Rohrleitung gemäß irgendeinem der vorhergehenden Ansprüche, **dadurch gekennzeichnet, dass** sie ein hinteres Organ (66) zum radialen Halten des Endabschnitts (34) aufweist, welches bezüglich der Einrichtung zur Klemmeinfassung (62) des Endabschnitts (34) axial im Abstand nach hinten angeordnet ist.

10. Verfahren zur Montage eines Endstücks (14) einer flexiblen Rohrleitung (10; 120; 130), aufweisend die folgenden Schritte:
- Bereitstellen einer rohrförmigen Hülle (20),
- Anordnen wenigstens einer Schicht (24, 25) Zugverstärkungen am Äußeren der rohrförmigen Hülle (20), wobei die Schicht Zugverstärkungen (24, 25) eine Mehrzahl von fadenförmigen Verstärkungselementen (29) aufweist, wobei jedes Verstärkungselement (29) einen Endabschnitt (34) aufweist,
- Anbringen einer End-Voute (50) und einer Abdeckung (51), die an der End-Voute (50) befestigt ist, wobei die End-Voute (50) und die Abdeckung (51) zwischen sich eine Kammer (52) zur Aufnahme des Endabschnitts (34) begrenzen,
- Einbringen eines Füllung-Materials (68) in die Aufnahme-Kammer (52) zum Einbetten des Endabschnitts (34),
- **dadurch gekennzeichnet, dass** es den folgenden Schritt aufweist:
- Anbringen einer Einrichtung (62) zur Klemmeinfassung des Endabschnitts (34), welche wenigstens ein radiales Relief (102, 106, 108, 112; 122, 126) zur Klemmeinfassung des Endabschnitts (34) definiert zum Bilden einer radialen Verformung (64) an dem Endabschnitt (34) gegenüber dem radialen Relief zur Klemmeinfassung (102, 106, 108, 112; 122, 126),
wobei die Einrichtung zur Klemmeinfassung (62) aufweist einen äußeren Ring (90) zur Klemmeinfassung und eine Stütz-Voute (94), die radial gegenüber dem äußeren Ring (90) zur Klemmeinfassung angeordnet ist, wobei wenigstens ein Endabschnitt (34) zwischen der Stütz-Voute (94) und dem äußeren Ring (90) angeordnet ist,
wobei die Stütz-Voute (94) ein erstes radiales Relief zur Klemmeinfassung (102) definiert, das gegenüber dem äußeren Ring (90) angeordnet ist, wobei das radiale Relief zur Klemmeinfassung (102) eine radiale Vertiefung und/oder einen radialen Vorsprung aufweist.

## Claims

1. Flexible pipe (10; 120; 130) for transporting fluid, comprising at least one tubular sheath (20) and at least one tensile armour layer (24, 25) arranged on the outside relative to the tubular sheath (20), the armour layer (24, 25) comprising a plurality of filiform armour elements (29), the flexible pipe (10) comprising a connection end-piece (14) mounted at the end of the tubular sheath (20), the end-piece (14) comprising:
- at least one end portion (34) of each armour element (29),
- an end vault (50) and a cap (51) fixed to the end vault (50), the end vault (50) and the cap (51) delimiting between them a chamber (52) for receiving the end portion;
- a filling material (68) for filling the receiving chamber (52), in which filling material the end portion (34) is embedded;
- at least one assembly (62) for crimping the end portion (34), defining at least one radial relief (102, 106, 108, 112; 122, 126) for crimping the end portion (34), the end portion (34) having a radial deformation (64) facing the crimping relief (102, 106, 108, 112; 122, 126),
the crimping assembly (62) comprising an outside crimping ring (90), a support vault (94) situated radially opposite the outside crimping ring (90), at least one end portion (34) being disposed between the support vault (94) and the outside ring (90), **characterised in that** the support vault (94) defines a first radial crimping relief (102), situated facing the outside ring (90), the radial crimping relief (102) comprising a radial hollow and/or a radial projection.

2. Pipe according to claim 1, **characterised in that** the radial deformation (64) is in the shape of a wave.

3. Pipe according to any one of the preceding claims, **characterised in that** the support vault (94) is fixed to the end vault (50).

4. Pipe according to any one of the preceding claims, comprising at least a first tensile armour layer (24) and at least a second tensile armour layer (25), the end-piece (14) comprising an intermediate crimping ring (92) arranged between a first end portion (34) of the first tensile armour layer (24) and a second end portion (34) of the second tensile armour layer (25).

5. Pipe according to claim 4, **characterised in that** the intermediate crimping ring (92) has a first intermediate relief (106) which radially deforms the first end portion (34) and/or a second intermediate relief (108) which radially deforms the second end portion (34).

6. Pipe according to any one of the preceding claims, **characterised in that** the part of the end portion (34) that is crimped by the crimping assembly (62) is applied directly to another end portion (34) of another armour layer (24).

7. Pipe according to claim 6, **characterised in that** the end portion (34) extends substantially parallel to the tubular sheath (20) over the entire length of the end-piece to the rear of the radial deformation (64).

8. Pipe according to any one of the preceding claims, **characterised in that** it comprises a front sealing assembly (54) around the tubular sheath (20), the front sealing assembly (54) being offset axially in front of or to the rear of the crimping assembly (62) of the end portion (34).

9. Pipe according to any one of the preceding claims, **characterised in that** it comprises a rear member (66) for radially holding the end portion (34), offset axially towards the rear relative to the crimping assembly (62) of the end portion (34).

10. Method for fitting an end-piece (14) of a flexible pipe (10; 120; 130), comprising the following steps:
- providing a tubular sheath (20);
- arranging at least one tensile armour layer (24, 25) on the outside of the tubular sheath (20), the tensile armour layer (24, 25) comprising a plurality of filiform armour elements (29), each armour element (29) comprising an end portion (34);
- putting in place an end vault (50) and a cap (51) fixed to the end vault (50), the end vault (50) and the cap (51) delimiting between them a receiving chamber (52) for receiving the end portion (34);
- introducing a filling material (68) into the receiving chamber (52) for embedding the end portion (34);
**characterised in that** it comprises the following step:
- putting in place an assembly (62) for crimping the end portion (34), defining at least one radial relief (102, 106, 108, 112; 122, 126) for crimping the end portion (34) to form a radial deformation (64) on the end portion (34) facing the radial crimping relief (102, 106, 108, 112; 122, 126),
the crimping assembly (62) comprising an outside crimping ring (90), a support vault (94) situated radially opposite the outside crimping ring (90), at least one end portion (34) being arranged between the support vault (94) and the outside ring (90),
the support vault (94) defining a first radial crimping relief (102) situated facing the outside ring (90), the radial crimping relief (102) comprising a radial hollow and/or a radial projection.
